# EUROPÄISCHE PATENTSCHRIFT

(11) **EP 2 620 559 B1**
(45) Veröffentlichungstag und Bekanntmachung des Hinweises auf die Patenterteilung: **13.02.2019**
(21) Anmeldenummer: 12008092.4
(22) Anmeldetag: 04.12.2012
(51) Int. Cl.: E03C 1/08, F16J 15/06

(54) **Strahlregler mit lagegesicherter Dichtung**
Jet regulator with gasket fixed thereto
Brise-jet avec joint fixé

(30) Priorität: 27.01.2012 DE 202012000808 U
(43) Veröffentlichungstag der Anmeldung: 31.07.2013
(73) Patentinhaber: Neoperl GmbH, 79379 Müllheim (DE)
(72) Erfinder: Blum, Gerhard, 77793 Gutach (DE); Weis, Christoph, 79379 Müllheim (DE)
(74) Vertreter: Börjes-Pestalozza, Henrich

(56) Entgegenhaltungen:
- DE-U1-202005 015 376
- DE-U1-202010 014 392
- DE-U1-202011 104 074
- US-A1- 2011 133 415

## Beschreibung

Die Erfindung betrifft ein sanitäres Einsetzteil mit einem Einsetzgehäuse, dessen Gehäuseumfangswandung einen hülsenförmigen zuströmseitigen Gehäuserandbereich hat, und mit einem scheibenförmigen Dichtring, der mit seinem Scheibenaußenumfang am Wandungsinnenumfang des hülsenförmigen Gehäuserandbereichs zumindest bereichsweise anliegt, wobei zwischen dem Scheibenaußenumfang des Dichtrings und dem Wandungsinnenumfang des Gehäuserandbereichs eine Dichtring-Sicherung vorgesehen ist, die wenigstens einen Sicherungsvorsprung hat, der am Wandungsinnenumfang des Gehäuserandbereiches oder am Scheibenaußenumfang des Dichtrings vorgesehen ist und der in eine ihm zugeordnete Sicherungsnut oder dergleichen Sicherungseinformung am jeweils anderen Bauteil vorsteht.

Man kennt bereits sanitäre Einsetzteile, die in ein Auslaufmundstück einsetzbar sind, welches am Wasserauslauf einer sanitären Auslaufarmatur befestigt werden kann. Um die Trennebene zwischen dem Auslaufmundstück, dem darin eingesetzten Einsetzteil und dem Wasserauslauf abdichten zu können, ist ein Dichtring vorgesehen, der im Inneren des Auslaufmundstücks zwischen dem meist als Strahlregler ausgebildeten Einsetzteil und dem abströmseitigen Stirnrand des Wasserauslaufs eingespannt ist und axial abdichtet. In unmontiertem Zustand wird die aus Auslaufmundstück, Einsetzteil und Dichtring bestehende Einheit durch den Dichtring gesichert, der sich im Inneren des Auslaufmundstücks verspannen und das Einsetzteil im Auslaufmundstück halten kann.

So ist aus der DE 20 2005 015 376 U1 bereits ein sanitäres Einsetzteil der eingangs erwähnten Art vorbekannt, das als Strahlregler ausgebildet ist und ein als Einsetzgehäuse dienendes Auslaufmundstück eingesetzt werden kann. Die Umfangswandung des Auslaufmundstücks weist einen zuströmseitigen Gehäuserandbereich auf, an dessen Wandungsinnenumfang ein Innengewinde angeordnet ist, mit dem das Auslaufmundstück an einem, am Wasserauslauf einer sanitären Auslaufarmatur vorgesehenen Außengewinde montiert werden kann. An dem das Innengewinde tragenden Wandungsinnenumfang des Auslaufmundstücks liegt ein scheibenförmiger Dichtring mit seinem Scheibenaußenumfang an. Zwischen dem Scheibenaußenumfang des Dichtrings und dem Wandungsinnenumfang des Gehäuserandbereiches des als Einsetzgehäuse dienenden Auslaufmundstücks ist eine Dichtring-Sicherung vorgesehen. Der Dichtring weist dazu an seinem Scheibenaußenumfang mehrere, in Umfangsrichtung voneinander beabstandete Sicherungsvorsprünge auf, die in die Gewindegänge des am Wandungsinnenumfang des Auslaufmundstücks vorgesehenen Innengewindes eingreifen. Das aus DE 20 2005 015 376 U1 vorbekannte Einsetzteil setzt stets ein hülsenförmiges Auslaufmundstück voraus, in welches das Einsetzteil derart tief eingesetzt werden muss, dass darin auch der Dichtring Platz findet. Da das als Sicherungseinformung der Dichtring-Sicherung dienende Innengewinde des Auslaufmundstücks in Umfangsrichtung stetig ansteigt, muss der Dichtring tief in den zuströmseitigen Gehäuserandbereich des Auslaufmundstücks eingesetzt werden, derart, dass die am Dichtring außenumfangsseitig vorstehenden Sicherungsvorsprünge in diese Gewindegänge eingreifen können.

Da das Auslaufmundstück den ästhetischen Eindruck einer sanitären Auslaufarmatur beeinträchtigen kann, und da das Auslaufmundstück sowie die Auslaufarmatur nur mit hohem Aufwand mit derselben Oberflächenoptik herzustellen ist, hat man auch bereits sanitäre Einsetzteile geschaffen, die am Gehäuseaußenumfang ihres Einsetzgehäuses ein Außengewinde aufweisen, mit dem die Einsetzteile in ein Innengewinde am Innenumfang des Wasserauslaufs einer sanitären Auslaufarmatur derart eingeschraubt werden können, dass die abströmseitige Gehäusestirnseite der Einsetzteile nur noch geringfügig über den Wasserauslauf vorsteht oder vorzugsweise mit ihm praktisch abschließt. Ein solches Einsetzteil ist beispielsweise in der DE 20 2010 014 392 U1 näher beschrieben. Auch bei diesen vorbekannten Einsetzteilen ist die Trennebene zwischen dem Einsetzteil und dem Wasserauslauf abzudichten. Zur axialen Abdichtung ist ein Dichtring vorgesehen, der zuströmseitig derart in das Einsetzgehäuse eingelegt werden kann, dass der Dichtring nur noch geringfügig in den zuströmseitig hülsenförmig vorstehenden Gehäusestirnrand eintaucht, wodurch nur sehr wenig radiale Vorspannung auf den Dichtring aufgebracht werden kann, damit ein Herausspringen des Dichtringes vermieden wird. Der in das Einsetzgehäuse eingesetzte Dichtring ist ausreichend im Einsetzgehäuse gehalten, um zusammen mit dem Einsetzgehäuse bequem im Wasserauslauf montiert werden zu können. Beim Transport der aus Einsetzteil und Dichtring bestehenden Einheit besteht aber das Risiko, dass der Dichtring bei übergroßen Erschütterungen oder beim Aneinanderstoßen mehrerer solcher, als Schüttgut zusammengefasster Einheiten sich unbeabsichtigt aus dem Einsetzgehäuse löst und das Einsetzgehäuse anschließend sogar versehentlich ohne den davon gelösten Dichtring am Wasserauslauf montiert wird, was zu unerwünschten Leckagen führen kann.

Aus der US 2011/0133415 A1 ist bereits ein Dichtring vorbekannt, den einen hülsenförmiger Abstandhalter umgreift. Um aus dem Dichtring und dem ihn umgreifenden Abstandhalter eine unverlierbare Funktionseinheit zu bilden, weist der Abstandshalter Einzinkungen auf, die über den Hülseninnenumfang des Abstandhalters nach innen bis in den elastischen Dichtring vorstehen. Diese Einzinkungen setzen jedoch voraus, dass zumindest der Abstandhalter aus Metall und insbesondere aus Blech hergestellt ist, was jedoch bei sanitären Einsetzteilen häufig nicht der Fall ist.

Es besteht daher insbesondere die Aufgabe, ein sanitäres Einsetzteil der eingangs erwähnten Art zu schaffen, bei dem der Dichtring und das Einsetzgehäuse eine sichere und praktisch unverlierbare Einheit bilden.

Bei dem erfindungsgemäßen Einsetzteil steht der Dichtring mit einem zuströmseitigen Ring-Teilbereich über den zuströmseitigen Stirnrand des Gehäuserandbereiches über, damit der Dichtring die Trennebene zwischen einem Ringabsatz im Wasserauslauf der sanitären Auslaufarmatur und der Zuströmseite des sanitären Einsetzteiles axial gut abdichten kann. Um bei einem solchen erfindungsgemäßen Einsetzteil die Bestandteile dieses Einsetzteiles aneinander zu halten und zu sichern, weist das erfindungsgemäße Einsetzteil eine Dichtring-Sicherung auf, die zwischen dem Scheibenaußenumfang des Dichtrings und dem Wandungsinnenumfang des Gehäuserandbereichs eine Dichtring-Sicherung vorgesehen ist, die wenigstens einen Sicherungsvorsprung hat, der am Wandungsinnenumfang des Gehäuserandbereichs vorgesehen ist und der in eine ihm zugeordnete Sicherungsnut oder dergleichen Sicherungseinformung am Dichtring vorsteht. Das erfindungsgemäße Einsetzteil weist eine Dichtring-Sicherung auf, die zwischen dem Scheibenaußenumfang des Dichtrings und dem Wandungsinnenumfang des Gehäuserandbereichs vorgesehen ist und die auch beispielsweise bei übergroßen Erschütterungen den Dichtring sicher im Einsetzgehäuse hält. Diese Dichtring-Sicherung weist einen Sicherungsvorsprung auf, der am Wandungsinnenumfang des Gehäuserandbereichs vorgesehen ist und der in eine ihm zugeordnete Sicherungsnut oder dergleichen Sicherungseinformung am Dichtring vorsteht. Bei dem erfindungsgemäßen Einsetzteil wird der als separates Bauteil hergestellte Dichtring sicher und praktisch unverlierbar im Einsetzgehäuse des sanitären Einsetzteiles gehalten, ohne dass dadurch der Herstellungsaufwand wesentlich erhöht wäre.

Eine bevorzugte Ausführungsform gemäß der Erfindung sieht vor, dass der zuströmseitige Stirnrand des Gehäuserandbereichs an den am Wandungsinnenumfang vorgesehenen Sicherungsvorsprung angrenzt und vorzugsweise in ihn übergeht. Bei dieser Ausführungsform kann der Sicherungsvorsprung praktisch mittig am Scheibenaußenumfang des Dichtringes angreifen.

Um einen besonders guten Halt zwischen dem Sicherungsvorsprung und der Sicherungseinformung der Dichtring-Sicherung zu erreichen, ist es zweckmäßig, wenn die Sicherungseinformung einen, an den in die Sicherungseinformung vorstehenden Teilbereich des Sicherungsvorsprungs formangepassten lichten Querschnitt hat.

Damit der Dichtring in das Einsetzgehäuse zuströmseitig gut eingesetzt werden kann, ist es vorteilhaft, wenn der Gehäuse-randbereich über einen innenumfangsseitig angrenzenden zurückgesetzten Bereich der zuströmseitigen Gehäusestirnfläche vorsteht. Zusätzlich oder stattdessen kann es aber auch zweckmäßig sein, wenn der Gehäuserandbereich über einen innenumfangsseitig angrenzenden zurückgesetzten Bereich eines zuströmseitig in das Einsetzgehäuse eingesetzten Funktionselements vorsteht.

Die mit dem Dichtring bewirkte axiale Abdichtung wird begünstigt, wenn der Dichtring zumindest eine Ringzone des zurückgesetzten Bereiches beaufschlagt. Wird diese Ringzone durch einen innenumfangsseitig angrenzenden zurückgesetzten Bereich der zuströmseitigen Gehäusestirnfläche einerseits und durch einen Teilbereich der zuströmseitigen Stirnfläche eines in das Einsetzgehäuse eingesetzten Funktionselementes andererseits gebildet, kann der diese Ringzone beaufschlagende Dichtring auch den zwischen den beiden Bauteilen gebildeten Ringspalt abdichten.

Eine automatisierte Montage des erfindungsgemäßen Einsetzteils wird erleichtert, wenn der Sicherungsvorsprung oder die Sicherungseinformung vorzugsweise etwa mittig in einer Mittelebene des Dichtringes angeordnet ist. Bei dieser Ausführung ist es gleichgültig, ob der Dichtring mit der einen oder mit der anderen Scheiben-Stirnseite in das Einsetzgehäuse eingesetzt wird.

Um ein unbeabsichtigtes Lösen des Dichtringes von dem Einsetzgehäuse bei Transport mehrerer solcher Einheiten als Schüttgut beispielsweise in einem Kunststoffbeutel zu verhindern, ist es vorteilhaft, wenn der Dichtring zumindest an einem seiner außenliegenden Eckbereiche eine Fase hat oder gerundet ist. Auch bei einer solchen Ausführungsform wird die automatisierte Montage wesentlich erleichtert, wenn der Dichtring an seinen beiden außenliegenden Eckbereichen eine Fase aufweist oder gerundet ist.

Ein bevorzugter Anwendungsbereich der vorliegenden Erfindung sieht vor, dass das Einsetzteil als Strahlregler ausgebildet ist.

Dabei sieht eine Weiterbildung gemäß der Erfindung vor, dass das Einsetzteil an dem Gehäuseaußenumfang seines Einsetzgehäuses ein zum Einschrauben in ein Innengewinde am Wasserauslauf einer sanitären Auslaufarmatur bestimmtes Außengewinde trägt. Bei einer solchen Ausführungsform kann auf ein Auslaufmundstück verzichtet werden, wobei die auf die auf das Einsetzteil und den Dichtring beschränkte Einheit auch hier unverlierbar aneinander gehalten ist.

Weiterbildungen gemäß der Erfindung ergeben sich aus den Ansprüchen in Verbindung mit der Beschreibung und der Zeichnung. Nachstehend wird die Erfindung anhand eines bevorzugten Ausführungsbeispieles noch näher beschrieben:
Es zeigt:
- Fig. 1: ein in einer perspektivischen Darstellung gezeigtes Einsetzteil mit einem Einsetzgehäuse, in das zuströmseitig ein scheibenförmiger Dichtring eingesetzt ist,
- Fig. 2: das Einsetzteil aus Figur 1 in einer Draufsicht auf seine Zuströmseite,
- Fig. 3: das Einsetzteil aus Figur 1 und 2 in einem Teil-Längsschnitt durch Schnittebene III-III aus Figur 2,
- Fig. 4: das Einsetzteil aus den Figuren 1 bis 3 in einem Detail-Längsschnitt im Bereich einer zwischen dem Dichtring und dem Einsetzgehäuse vorgesehenen Dichtring-Sicherung,

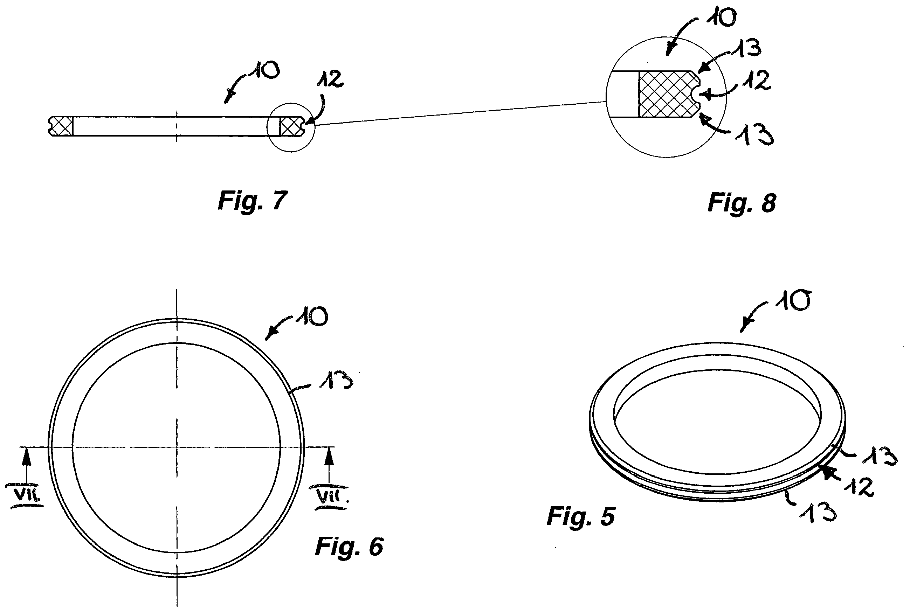

- Fig. 5: den Dichtring des Einsetzteiles aus den Figuren 1 bis 4 in einer perspektivischen Darstellung,
- Fig. 6: den Dichtring aus Figur 5 in einer Draufsicht,
- Fig. 7: den Dichtring aus den Figuren 5 und 6 in einem Längsschnitt durch Schnittebene VII-VII aus Figur 6 und
- Fig. 8: den scheibenförmigen Dichtring aus den Figuren 5 bis 7 in einem Detail-Längsschnitt, in welchem auch der Scheibenaußenumfang des Dichtringes gut zu erkennen ist.

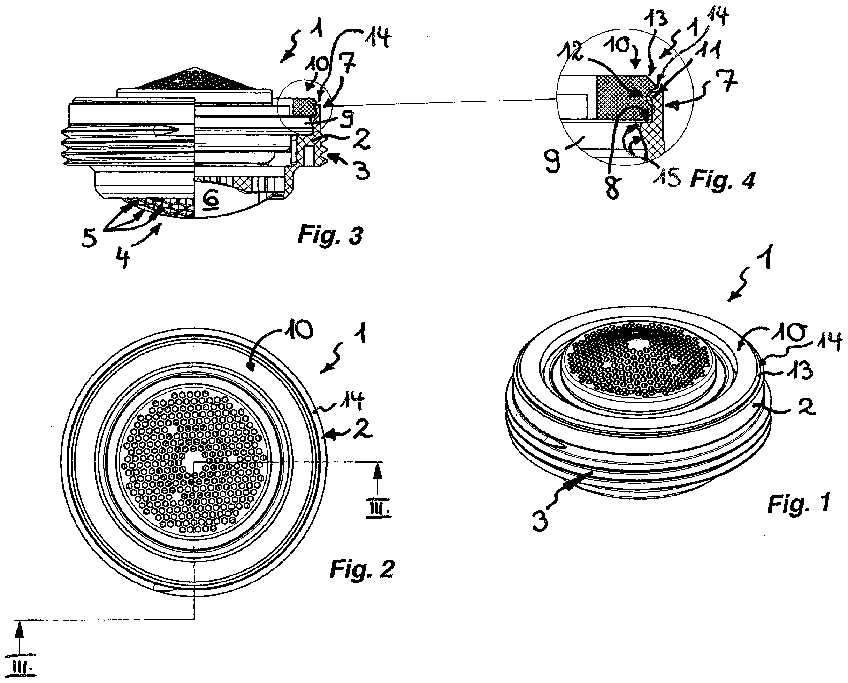

In den Figuren 1 bis 4 ist ein sanitäres Einsetzteil 1 dargestellt, das hier als Strahlregler ausgebildet ist. Das Einsetzteil 1 hat ein Einsetzgehäuse 2, das am Wasserauslauf einer hier nicht weiter gezeigten sanitären Auslaufarmatur montierbar ist. Am Außenumfang des Einsetzgehäuses 2 ist dazu ein Außengewinde 3 vorgesehen, mit dem das Einsetzteil 1 derart in ein Innengewinde im Wasserauslauf eingeschraubt werden kann, bis nur noch allenfalls ein abströmseitiger Teilbereich des Einsetzgehäuses 2 geringfügig über den Wasserauslauf vorsteht oder das Einsetzgehäuse 2 praktisch bündig mit dem Wasserauslauf abschließt. Um das Ein- und Ausschrauben des Einsetzgehäuses 2 im Wasserauslauf zu erleichtern, ist an der Abströmseite des Einsetzgehäuses 2 ein Strömungsgleichrichter 4 vorgesehen, der in einer wabenzellenartigen Struktur mit Durchflussöffnungen 5 eine etwa mittig angeordnete Einformung 6 hat, die hier als Münzschlitz ausgebildet ist. In diesem Münzschlitz kann erforderlichenfalls auch eine Münze als Drehwerkzeug eingesetzt werden.

Aus einem Vergleich der Figuren 1, 3 und 4 wird deutlich, dass die Gehäuseumfangswandung des Einsetzgehäuses 2 einen hülsenförmigen zuströmseitigen Gehäuserandbereich 7 hat, der über einen innenumfangsseitig angrenzenden zurückgesetzten Bereich 8 der zuströmseitigen Gehäusestirnfläche und über die zuströmseitige Stirnfläche eines in das Einsetzgehäuse 2 eingesetzten Funktionselementes 9 vorsteht.

Das Einsetzteil 1 hat einen separat hergestellten scheibenförmigen Dichtring 10, der mit seinem Scheibenaußenumfang am Wandungsinnenumfang des hülsenförmigen Gehäuserandbereiches 7 zumindest bereichsweise anliegt. Das Einsetzteil 1 weist eine Dichtring-Sicherung auf, die zwischen dem Scheibenaußenumfang des Dichtringes 10 und dem Wandungsinnenumfang des Gehäuserandbereiches 7 vorgesehen ist und die beispielsweise auch bei übergroßen Erschütterungen den Dichtring 10 sicher im Einsetzgehäuse 2 hält. Diese Dichtring-Sicherung weist einen Sicherungsvorsprung 11 auf, der am Wandungsinnenumfang des Gehäuserandbereiches 7 vorgesehen ist. Dieser Sicherungsvorsprung 11 ist als ein am Wandungsinnenumfang des Gehäuserandbereiches 7 radial nach innen vorstehender Ringwulst ausgebildet und steht in eine ihm zugeordnete Sicherungseinformung 12 am Außenumfang des Dichtringes 10 vor.

Um die Trennebene zwischen dem Einsetzteil 1 und einem im Wasserauslauf vorgesehenen Ringabsatz axial abdichten zu können, steht der Dichtring 10 mit einem zuströmseitigen Ring-Teilbereich über den zuströmseitigen Stirnrand 14 des Gehäuserandbereiches 7 über. Der zuströmseitige Stirnrand 14 des Gehäuserandbereichs 7 grenzt an den am Wandungsinnenumfang vorgesehenen und hier als Ringwulst ausgebildeten Sicherungsvorsprung 11 derart an, dass dieser zuströmseitige Stirnrand 14 des Gehäuserandbereichs 7 in den Sicherungsvorsprung 11 übergeht.

Aus dem Detail-Längsschnitt in Figur 4 ist erkennbar, dass die am Dichtring 10 vorgesehene Sicherungseinformung 12 einen lichten Querschnitt hat, der an den in die Sicherungseinformung vorstehenden Teilbereich des Sicherungsvorsprungs 11 formangepasst ist.

Um die automatisierte Montage des Einsetzteiles 1 zu erleichtern und um den Herstellungsaufwand noch zusätzlich zu reduzieren, ist die Sicherungseinformung 12 in einer Mittelebene des Dichtringes 10 angeordnet. Der Dichtring 10 kann etwa rechtwinklige Eckbereiche aufweisen. Bevorzugt wird jedoch die hier dargestellte Ausführungsform, bei welcher der Dichtring 10 an seinen beiden außenliegenden Eckbereichen eine Fase 13 aufweist oder gerundet ist. Durch die Fase 13 oder die gerundete Ausgestaltung der außenliegenden Eckbereiche des Dichtringes 10 wird noch zusätzlich erschwert, dass der Dichtring 10 bei eng aneinander anliegenden Einsetzteilen 1 und bei einem Aneinanderstoßen mehrerer solcher, als Schüttgut beispielsweise in einem Kunststoffbeutel zusammengefasster Einsetzteile aus dem Einsetzgehäuse 2 gelöst wird.

In Figur 3 ist erkennbar, dass der Dichtring 10 die zurückgesetzten Bereiche des Einsetzgehäuses 2 einerseits und des Funktionselementes 9 andererseits in einer Ringzone derart beaufschlagt, dass auch der zwischen dem Funktionselement 9 und dem Einsetzgehäuse 2 verbleibende Ringspalt 15 abgedichtet ist.

### Bezugszeichenliste

- 1: Einsetzteil
- 2: Einsetzgehäuse
- 3: Außengewinde (am Einsetzgehäuse 2)
- 4: Strömungsgleichrichter
- 5: Durchflussöffnungen (des Strömungsgleichrichters)
- 6: Einformung (am Strömungsgleichrichter 4)
- 7: Gehäuserandbereich
- 8: Bereich (der zuströmseitigen Gehäusestirnfläche)
- 9: Funktionselement
- 10: Dichtring
- 11: Sicherungsvorsprung
- 12: Sicherungseinformung
- 13: Fase (am Dichtring 10)
- 14: zuströmseitiger Stirnrand (des Gehäuserandbereiches 7)
- 15: Ringspalt (zwischen Bereich 8 und Funktionselement 9)

## Patentansprüche

1. Sanitäres Einsetzteil (1) mit einem Einsetzgehäuse (2), dessen Gehäuseumfangswandung einen hülsenförmigen zuströmseitigen Gehäuserandbereich (7) hat, und mit einem scheibenförmigen Dichtring (10), der (10) mit seinem Scheibenaußenumfang am Wandungsinnenumfang des hülsenförmigen Gehäuserandbereiches (7) zumindest bereichsweise anliegt, wobei der Dichtring (10) mit einem zuströmseitigen Ring-Teilbereich über den zuströmseitigen Stirnrand (13) des Gehäuserandbereiches (7) übersteht, **dadurch gekennzeichnet, dass** zwischen dem Scheibenaußenumfang des Dichtrings (10) und dem Wandungsinnenumfang des Gehäuserandbereichs (7) eine Dichtring-Sicherung vorgesehen ist, die wenigstens einen Sicherungsvorsprung (11) hat, der (11) am Wandungsinnenumfang des Gehäuserandbereiches (7) vorgesehen ist und der (11) in eine ihm zugeordnete Sicherungsnut am Scheibenaußenumfang des Dichtrings (10) vorsteht, und dass der Sicherungsvorsprung (11) als ein am Wandungsinnenumfang des Gehäuserandbereichs (7) radial nach innen vorstehender Ringwulst ausgebildet ist.

2. Einsetzteil nach Anspruch 1, **dadurch gekennzeichnet, dass** der zuströmseitige Stirnrand (13) des Gehäuserandbereichs (7) an den am Wandungsinnenumfang vorgesehenen Sicherungsvorsprung (11) angrenzt und vorzugsweise in ihn übergeht.

3. Einsetzteil nach Anspruch 1 oder 2, **dadurch gekennzeichnet, dass** die Sicherungseinformung (12) einen, an den in die Sicherungseinformung (12) vorstehenden Teilbereich des Sicherungsvorsprungs (11) formangepassten lichten Querschnitt hat.

4. Einsetzteil nach einem der Ansprüche 1 bis 3, **dadurch gekennzeichnet, dass** der Gehäuserandbereich (7) über einen innenumfangsseitig angrenzenden zurückgesetzten Bereich (8) der zuströmseitigen Gehäusestirnfläche vorsteht.

5. Einsetzteil nach einem der Ansprüche 1 bis 4, **dadurch gekennzeichnet, dass** der Gehäuserandbereich (7) über einen innenumfangsseitig angrenzenden zurückgesetzten Bereich eines zuströmseitig in das Einsetzgehäuse (2) eingesetzten Funktionselements (9) vorsteht.

6. Einsetzteil nach Anspruch 4 oder 5, **dadurch gekennzeichnet, dass** der Dichtring (10) zumindest eine Ringzone des zurückgesetzten Bereiches beaufschlagt.

7. Einsetzteil nach einem der Ansprüche 1 bis 6, **dadurch gekennzeichnet, dass** der Sicherungsvorsprung (11) oder die Sicherungseinformung (12) vorzugsweise etwa mittig in einer Mittelebene des Dichtringes (10) angeordnet ist.

8. Einsetzteil nach einem der Ansprüche 1 bis 7, **dadurch gekennzeichnet, dass** der Dichtring (10) zumindest an einem seiner außenliegenden Eckbereiche eine Fase (13) hat oder gerundet ist.

9. Einsetzteil nach einem der Ansprüche 1 bis 8, **dadurch gekennzeichnet, dass** der Dichtring (10) an seinen beiden außenliegenden Eckbereichen eine Fase (13) aufweist oder gerundet ist.

10. Einsetzteil nach einem der Ansprüche 1 bis 9, **dadurch gekennzeichnet, dass** das Einsetzteil (1) als Strahlregler ausgebildet ist.

11. Einsetzteil nach einem der Ansprüche 1 bis 10, **dadurch gekennzeichnet, dass** das Einsetzteil (1) an dem Gehäuseaußenumfang seines Einsetzgehäuses (2) ein zum Einschrauben in ein Innengewinde am Wasserauslauf einer sanitären Auslaufarmatur bestimmtes Außengewinde (3) trägt.

## Claims

1. Sanitary insert component (1) having an insert shell (2), the shell circumferential wall of which has a sleeve-like shell edge region (7) on the infeed side, and having a disc-like sealing ring (10), which (10) rests with its disc outer circumference on the wall inner circumference of the sleeve-like shell edge region (7), at least in some regions, the sealing ring (10) projecting with an annular sub-region on the infeed side beyond the front edge (13) on the infeed side of the shell edge region (7),
**characterized in that** between the disc outer circumference of the sealing ring (10) and the wall inner circumference of the shell edge region (7) there is provided a sealing-ring securing means which has at least one securing projection (11) which (11) is provided on the wall inner circumference of the shell edge region (7) and which (11) projects into a securing groove assigned to it on the disc outer circumference of the sealing ring (10), and **in that** the securing projection (11) is formed as an annular bead projecting radially inwards on the wall inner circumference of the shell edge region (7).

2. Insert component according to Claim 1, **characterized in that** the front edge (13) on the infeed side of the shell edge region (7) adjoins the securing projection (11) provided on the wall inner circumference, and preferably merges into the same.

3. Insert component according to Claim 1 or 2, **characterized in that** the securing indentation (12) has a clear cross section matched to the shape of the sub-region of the securing projection (11) that projects into the securing indentation (12) .

4. Insert component according to one of Claims 1 to 3, **characterized in that** the shell edge region (7) projects beyond a set-back region (8) of the shell front face on the infeed side which adjoins on the inner circumferential side.

5. Insert component according to one of Claims 1 to 4, **characterized in that** the shell edge region (7) projects beyond a set-back region of a functional element (9) inserted into the insert shell (2) on the infeed side which adjoins on the inner circumferential side.

6. Insert component according to Claim 4 or 5, **characterized in that** the sealing ring (10) acts on at least one annular zone of the set-back region.

7. Insert component according to one of Claims 1 to 6, **characterized in that** the securing projection (11) or the securing indentation (12) is/are preferably arranged approximately centrally in a mid-plane of the sealing ring (10).

8. Insert component according to one of Claims 1 to 7, **characterized in that** the sealing ring (10) has a chamfer (13) or is rounded, at least on one of its outer corner regions.

9. Insert component according to one of Claims 1 to 8, **characterized in that** the sealing ring (10) has a chamfer (13) or is rounded on its two outer corner regions.

10. Insert component according to one of Claims 1 to 9, **characterized in that** the insert component (1) is formed as a jet regulator.

11. Insert component according to one of Claims 1 to 10, **characterized in that** on the shell outer circumference of its insert shell (2), the insert component (1) bears an external thread (3) intended to be screwed into an internal thread on the water outlet of a sanitary outlet fitting.

## Revendications

1. Pièce d'insertion sanitaire (1) avec un boîtier d'insertion (2), dont la paroi périphérique de boîtier a une région de bord de boîtier amont en forme de douille (7), et avec un anneau d'étanchéité en forme de rondelle (10), qui (10) s'applique au moins localement par sa périphérie extérieure de rondelle sur la périphérie intérieure de paroi de la région de bord de boîtier en forme de douille (7), dans laquelle l'anneau d'étanchéité (10) est saillant par une région partielle d'anneau amont au-delà du bord frontal amont (13) de la région de bord de boîtier (7), **caractérisée en ce qu'**il est prévu entre la périphérie extérieure de rondelle de l'anneau d'étanchéité (10) et la périphérie intérieure de paroi de la région de bord de boîtier (7), un blocage d'anneau d'étanchéité, qui comprend au moins une saillie de blocage (11), qui (11) est prévue sur la périphérie intérieure de paroi de la région de bord de boîtier (7) et qui (11) est saillante dans une rainure de blocage associée à celle-ci sur la périphérie extérieure de rondelle de l'anneau d'étanchéité (10), et **en ce que** la saillie de blocage (11) est réalisée sous la forme d'un bourrelet annulaire saillant radialement vers l'intérieur sur la périphérie intérieure de paroi de la région de bord de boîtier (7).

2. Pièce d'insertion selon la revendication 1, **caractérisée en ce que** le bord frontal amont (13) de la région de bord de boîtier (7) est adjacente à la saillie de blocage (11) prévue sur la périphérie intérieure de paroi et de préférence se prolonge dans celle-ci.

3. Pièce d'insertion selon la revendication 1 ou 2, **caractérisée en ce que** le creux de blocage (12) a une section transversale libre de forme adaptée à la région partielle de la saillie de blocage (11) saillante dans le creux de blocage (12).

4. Pièce d'insertion selon l'une quelconque des revendications 1 à 3, **caractérisée en ce que** la région de bord de boîtier (7) est saillante au-delà d'une région (8) de la face frontale de boîtier amont, qui est en retrait et adjacente du côté de la

5. Pièce d'insertion selon l'une quelconque des revendications 1 à 4, **caractérisée en ce que** la région de bord de boîtier (7) est saillante au-delà d'une région, en retrait et adjacente du côté de la périphérie intérieure, d'un élément fonctionnel (9) inséré en amont dans le boîtier d'insertion (2).

6. Pièce d'insertion selon la revendication 4 ou 5, **caractérisée en ce que** l'anneau d'étanchéité (10) occupe au moins une zone annulaire de la région en retrait.

7. Pièce d'insertion selon l'une quelconque des revendications 1 à 6, **caractérisée en ce que** la saillie de blocage (11) ou le creux de blocage (12) est disposé(e) de préférence environ au milieu dans un plan médian de l'anneau d'étanchéité (10).

8. Pièce d'insertion selon l'une quelconque des revendications 1 à 7, **caractérisée en ce que** l'anneau d'étanchéité (10) comporte un chanfrein (13) ou est arrondi à au moins une de ses régions d'angle extérieures.

9. Pièce d'insertion selon l'une quelconque des revendications 1 à 8, **caractérisée en ce que** l'anneau d'étanchéité (10) présente un chanfrein (13) ou est arrondi à ses deux régions d'angle extérieures.

10. Pièce d'insertion selon l'une quelconque des revendications 1 à 9, **caractérisée en ce que** la pièce d'insertion (1) est constituée par un brise-jet.

11. Pièce d'insertion selon l'une quelconque des revendications 1 à 10, **caractérisée en ce que** la pièce d'insertion (1) porte sur la périphérie extérieure de boîtier de son boîtier d'insertion (2) un filet extérieur (3) destiné à être vissé dans un filet intérieur sur le bec d'une robinetterie sanitaire.
